Europäisches Patentamt

European Patent Office

Office européen des brevets

(19)

(11) Publication number: **0 387 031**
**A2**

# (12) EUROPEAN PATENT APPLICATION

(21) Application number: **90302431.3**

(51) Int. Cl.⁵: **G01D 18/00**

(22) Date of filing: **07.03.90**

(30) Priority: **08.03.89 US 320335**

(43) Date of publication of application:
**12.09.90 Bulletin 90/37**

(84) Designated Contracting States:
**BE CH ES FR GB IT LI**

(71) Applicant: **WESTINGHOUSE ELECTRIC CORPORATION**
**Westinghouse Building Gateway Center**
**Pittsburgh Pennsylvania 15222(US)**

(72) Inventor: **Kenny, Thomas Joseph**
**717 Bar Harbor Drive**
**Pittsburgh, PA 15239(US)**

(74) Representative: **van Berlyn, Ronald Gilbert**
**23, Centre Heights**
**London, NW3 6JG(GB)**

(54) **Automatic transducer excitation source testing system.**

(57) An automatic testing system for on-line testing of a transducer-excitation source, provides on line testing of the magnitude of current provided to a transducer. The system also enables testing of excitation source redundancy. The system includes an excitation source; an electrical element; a connection device, having an output, for selectively connecting the output to one of the transducer and the electrical element, and for selectively connecting the excitation source to one of the electrical element and the transducer, in accordance with at least one control signal; and control device for providing the at least one control signal to connect the excitation source to the electrical element during a predetermined time and to the transducer during another predetermined time so that the transducer remains on line.

EP 0 387 031 A2

FIG. 3

# AUTOMATIC TRANSDUCER EXCITATION SOURCE TESTING SYSTEM

## BACKGROUND OF THE INVENTION

The present invention generally relates to automatic calibration of process transducers, and more particularly to the testing of a transducer excitation source. To calibrate transducer input circuitry, test systems typically disconnect a transducer from input circuitry and replace it with a reference (either voltage or current). However, disconnection of a transducer from the input circuitry for either calibration of the transducer or its excitation source is undesirable. This is because during the disconnect time a system controller does not have the ability to determine the state of a process variable that the disconnected transducer is intended to detect. This is especially critical in nuclear power plant control systems where continuous monitoring of process variables is highly desirable.

Calibration systems have been developed to minimize the transducer disconnect time. One such system is shown in U.S. Patent No. 4,642,636; prior art Fig. 1 in this text is a block diagram of a system embodying the calibration system disclosed in U.S. Patent No. 4,642,636. In Fig. 1, a transducer 10, such as a RTD (resistance temperature device) senses a process variable. An excitation current source 15 provides the RTD 10 with a constant current. An example of an excitation current source 15 is shown in U.S. Patent No. 4,672,226. A relay 20 (Fig. 1) switches the current from excitation source 15 to either the RTD 10 or a precision resistor such as one of the precision resistors 25, 30, in order to provide a reference signal to an amplifier 35. A relay 40 connects the amplifier 35 to either the RTD 10 or to another relay 45. The relay 45, in turn, connects either the high value precision resistor 25 or the low value precision resistor 30 to the amplifier 35 via relay 40.

U.S. Patent No. 4,700,174 discloses an improvement over the calibration system taught by U.S. Patent No. 4,642,636. Fig. 2 is a block diagram of a system embodying the calibration system disclosed in U.S. Patent No. 4,700,174. In Fig. 2, the current sources 15 are connected in parallel (i.e., auctioneered) through diodes 50. U.S. Patent No. 4,672,226 discusses the operation of such a redundant or auctioneered excitation current source arrangement. Auctioneering of the excitation sources 15 allows one of the excitation sources 15 to be removed without interrupting current through the RTD 10. The signal from RTD 10 passes through a test relay 55 and a multiplexer 60 to amplifier 35. Applicable regulations require a circuit such as test relay 55 to be included in nuclear power monitoring system to enable external test signals to be injected into the system via, for example, a terminal 65. During injection of such an external signal, test relay 55 disconnects RTD 10 from amplifier 35, taking the monitored process variable off line. However, during normal operation, the RTD 10 is not taken off line, even during calibration of the system as discussed in detail in U.S. Patent No. 4,700,174. Multiplexer 60 connects precision resistors 25 and 30 to amplifier 35 after the status of the RTD 10 has been tested by the system processor.

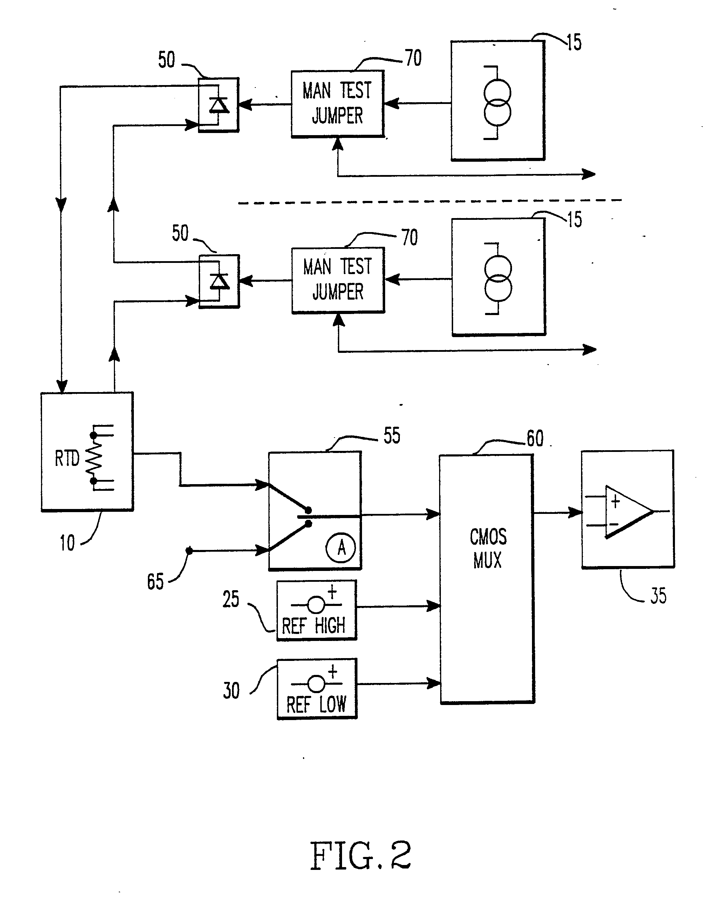

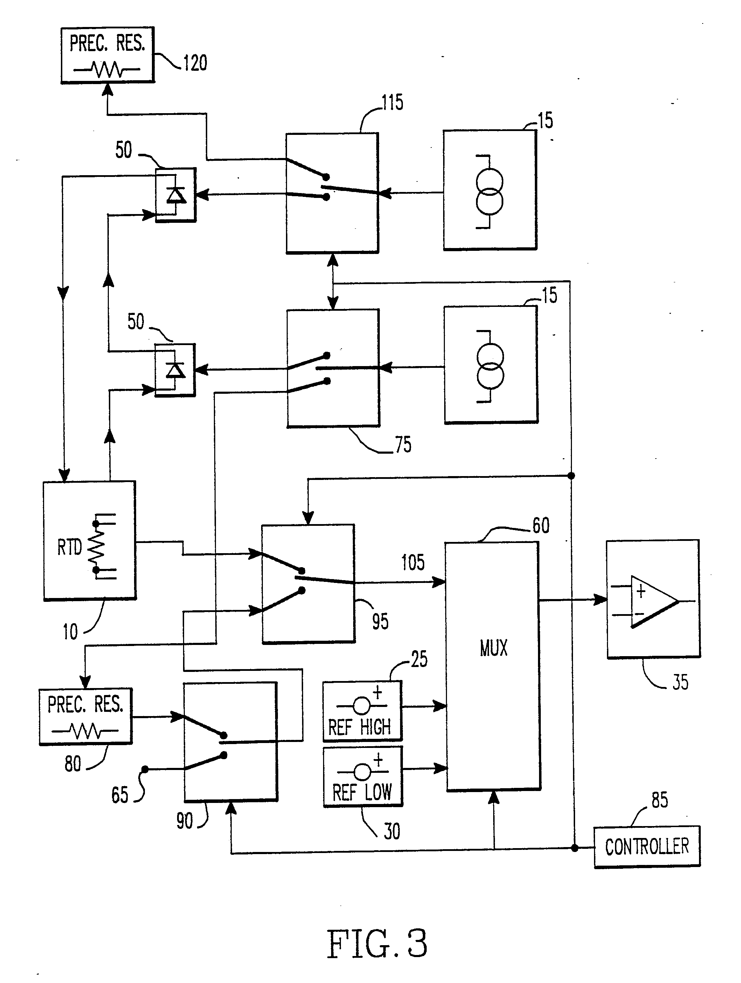

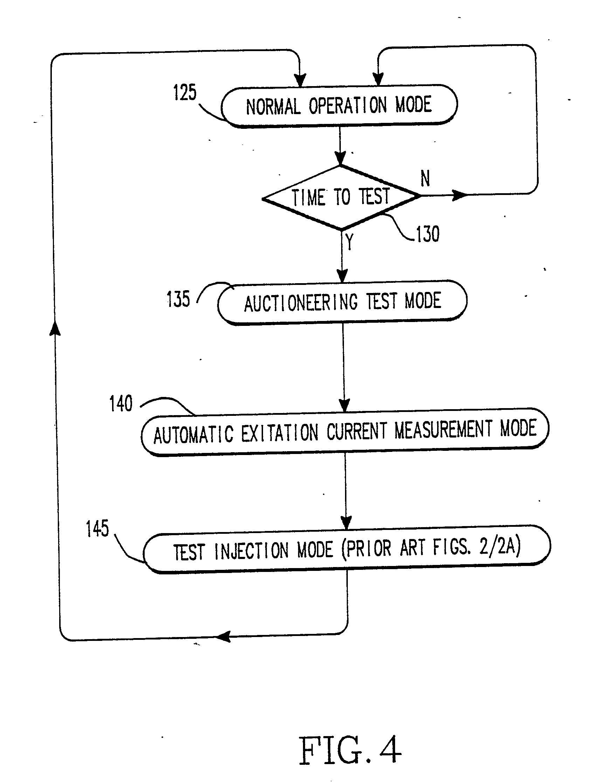

It is not possible to automatically calibrate the excitation current sources 15 in the system disclosed in Fig. 2. Instead, the excitation sources 15 must be tested manually and the results of this test provided to the system processor to be stored as fixed values until the next check of the excitation sources. Also, with the Fig. 2 system, it is not possible to determine if the excitation source redundance (i.e., auctioneering) feature is functional without manually removing one of the excitation sources 15 and monitoring the output of amplifier 35.

## SUMMARY OF THE INVENTION

It is an object of the present invention to provide an automatic excitation source testing system which selectively (i) eliminates the need to manually test transducer excitation sources; (ii) automatically tests on-line transducer excitation source redundancy; and (iii) is capable of on line testing of transducer excitation sources.

The invention in its broad form resides in an automatic testing system for on-line testing of a transducer excitation source, for providing signals to an amplifier at predetermined times, said system comprising: an excitation source; an electrical element; characterized by: connection means, having an output, for selectively connecting said output to one of the transducer and said electrical element, and for selectively connecting said excitation source to one of said electrical element and the transducer, in accordance with at least one control signal; and control means for providing said at least one control signal to connect said excitation source to said electrical element during one of the predetermined times and to the transducer during another one of the predetermined times.

The embodiment described herein provides an excitation source; an electrical element; a connection means, having an output, for selectively connecting the output to one of the transducer and the electrical element, and for selectively connecting the excitation source to one of the electrical element and the transducer, in accordance with at least one control signal; and control means for providing the at least one control signal to connect the excitation source to the electrical element during a predetermined time and to the transducer during another predetermined time.

## BRIEF DESCRIPTION OF THE DRAWINGS

A more detailed understanding of the present invention may be had from the following description of a preferred embodiment, given by way of example only, and to be understood in conjunction with the accompanying drawings wherein:

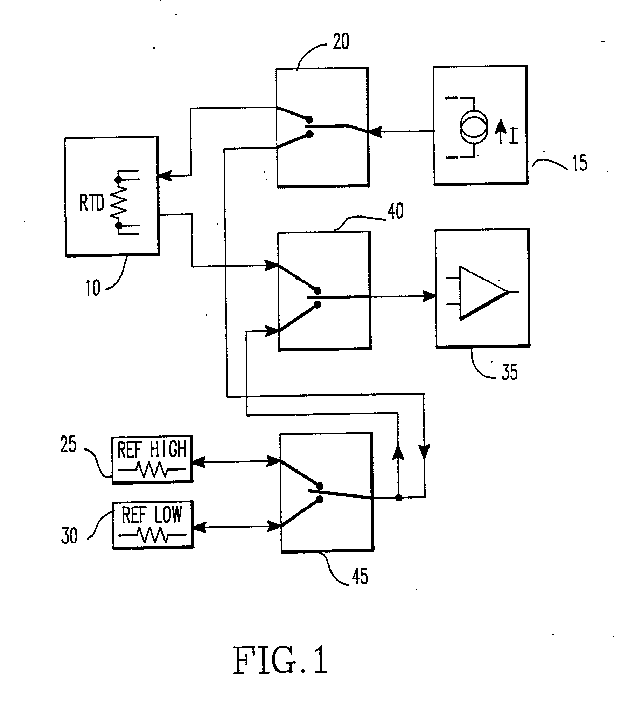

Fig. 1 is a block diagram of a known transducer calibration system;

Fig. 2 is a block diagram of another known transducer calibration system;

Fig. 3 is a block diagram of an automatic transducer excitation source testing system embodying the present invention; and

Fig. 4 is a flow diagram of transducer excitation source testing in accordance with a preferred embodiment of the present invention.

## DESCRIPTION OF THE PREFERRED EMBODIMENTS

Fig. 3 is a block diagram of an automatic transducer excitation source testing system embodying the present invention. The elements of the Fig. 3 system that are the same as those shown in Fig. 2 have the same reference numerals as shown in Fig. 2. In Fig. 3, an excitation source 15 supplies a constant current to, for example, RTD 10. As shown, excitation source 15 is connected to an input of a switch 75. A first output of the switch 75 is connected to an electrical element 80. A second output of the switch 75 is connectable to an RTD 10 through a source coupling means 50 that is explained below.

A controller 85 provides a control signal to the switch 75. This control signal causes current from the excitation source 15 to be supplied to either the RTD 10 or to the electrical element 80. In a preferred embodiment of the present invention, the electrical element 80 comprises a precision resistor. The electrical element 80 is connected to a first input of a second switch 90. A second input of the second switch 90 is connectable to receive an external test signal from terminal 65, as discussed with respect to test relay 55 shown in Fig. 2. The second switch 90 connects either the electrical element 80 or the terminal 65 to an output of the second switch 90, in accordance with a control signal provided by the controller 85. The controller 85 comprises a control means and can include, for example, a processor or sequential hardware circuitry.

A third switch 95 connects either the RTD 10 or the output of the second switch 90 to an input 105 of a multiplexer means 60. A first input of the third switch 95 is connectable to the RTD 10 as shown in Fig. 3, and a second input of the third switch 95 is connected to the output of the second switch 90. The third switch 95 receives a control signal from controller 85 and connects either the first input or the second input to the multiplexer means 60, in accordance with this control signal. The multiplexer means 60 can comprise any multiplexing element, such as a common semiconductor multiplexer or an electro-mechanical switch, that are controllable by at least one control signal provided by a controller such as controller 85. As shown in Fig. 3, the amplifier 35 amplifies an output 110 of the multiplexer means 60. The output of the amplifier 35 is sampled by a processor (not shown).

The state of the RTD 10 is periodically checked by the processor (not shown) by sampling the output of the amplifier 35. Because the processor has other tasks such as checking the state of a number of other transducers, the RTD 10 need not be continuously connected to the amplifier 35. It is sufficient that the RTD 10 be connected to the amplifier 35 at the predetermined time the processor samples the output of the amplifier 35 in order to test the state of the RTD 10. Under such a condition, the RTD 10 is in an on line condition, because at the times that the processor needs to check the status of the RTD 10, the transducer is connected on line to the amplifier 35. In other words, the disconnection of the RTD 10 from amplifier 35

3

is transparent to the processor. One illustrative sampling scheme that achieves such transparency is discussed in U.S. Patent No. 4,700,174.

To test the magnitude of the current provided by the excitation source 15, the controller 85 connects the excitation source 15 to the first output of switch 75; connects the first input of the second switch to the second input of the third switch 95; connects the second input of the third switch 95 to the multiplexer means 60; and connects the multiplexer input 105 to the amplifier 35 via output 110. To ensure that the RTD 10 is on line, these connections are made during a predetermined time that the processor does not need to sample the status of the RTD 10. For example, the excitation source 15 can be tested at a time when the processor has sampled all of the transducers, and thus has completed its sampling cycle; or during the time between samples of transducers. The multiplexer means 60 can also periodically connect respective ones of electrical reference elements 25 and 30 to the output 110 in order to provide high and low reference voltages to the processor via the amplifier 35. One scheme for periodically connecting these elements to the output 110 is discussed in U.S. Patent No. 4,700,174. The first, second and third switches (75, 90, 95) together with the multiplexer means 60 comprise a connection means for selectively connecting the output 110 to one of the RTD 10 and the electrical element 80, and for selectively connecting the excitation source 15 to one of the electrical element 80 and the RTD 10, in accordance with at least one control signal provided by the controller 85.

Fig. 3 also illustrates an optional additional excitation source 15. This additional excitation source 15 is connected to the input of a fourth switch 115. A first output of the fourth switch 115 is connected to an additional electrical element 120. The additional electrical element 120 and the fourth switch 115 are optionally used if it is desired to include excitation source redundancy. The additional electrical element 120 is connected through switches (not shown) that are arranged in a manner similar to switches 90 and 95, and thus, to the multiplexer means 60 or to an additional multiplexer means (not shown). A second output of the fourth switch 115 is connectable to the RTD 10 through a source coupling means 50. The coupling means 50 can comprise, for example, a diode as shown in Fig. 3. The additional excitation source 15, when coupled to the RTD 10 through the fourth switch 115 and the source coupling means 50 provides excitation source redundancy. Excitation source redundancy is generally described in U.S. Patent No. 4,672,226.

Together, the first and fourth switches (75, 115) enable the excitation source redundancy feature to be tested, and the functioning or malfunctioning state of the excitation sources 15 to be determined. For example, the controller 85 causes the third switch 95 to connect RTD 10 to multiplexer input 105, and causes the multiplexer means 60 to connect the multiplexer input 105 to the output 110. In this state, controller 85 alternately connects the RTD 10 to one of the excitation sources 15. If the excitation source redundancy feature is operating properly, thus switching the RTD 10 between excitation sources 15 will not affect the state of the RTD 10 as is appears at the output of amplifier 35.

Fig. 4 is a flow diagram of the processing of an automatic transducer excitation source testing system embodying the present invention. During normal operation, processing step 125, the controller 85 connects the excitation source 15 to RTD 10 through the first switch 75 and coupling means 50. Similarly, controller 85 connects the additional excitation source 15 (if included in the system) to the RTD 10 through the fourth switch 115 and coupling means 50. The third switch 95 is set to connect the RTD 10 to the multiplexer input 105. In this normal operational mode, the state of the second switch 90 is irrelevant, because the RTD 10 is connected to the multiplexer means 60 through the third switch 95. At a predetermined time, the multiplexer 60 connects the multiplexer input 105 to the output 110, and thus to amplifier 35 for sampling by the processor. Thus, the RTD 10 appears to the processor as being on line.

After the processor samples, for example, all of the transducers in a system, processing proceeds to decision step 130. This step determines if it is time to perform system testing. System testing can occur at any selected time, and in nuclear monitoring systems is performed, for example, at least once a month. If it is not time to perform system testing, then processing returns to the normal operation mode step 125. Otherwise, processing proceeds to an auctioneering test mode step 135. In this step, controller 85 alternately connects and disconnects the excitation sources 15 to an from RTD 10. Simultaneously, the output of amplifier 35 (the third switch 95 having its first input connected to multiplexer input 105) is sampled to ensure that alternation of the excitation sources 15 does not affect the state of the RTD 10 as it appears at the output of amplifier 35.

After verifying that the excitation source redundancy (i.e., auctioneering) is functioning properly, the processing proceeds to step 140. In step 140, the first switch 75 connects the excitation source 15 to the electrical element 80; that is, to a precision resistor. The second switch 90 is set to connect its first input to the second input of the third switch 95. The third switch 95 connects its second input to the multiplexer input 105, and the multiplexer means 60 connects the multiplexer input 105 to amplifier 35 via output 110. The output of the amplifier 35 therefore represents the magnitude of the current provided by the excitation source 15.

After sampling the output of amplifier 35, processing proceeds to step 145. In step 145, the third switch 95 connects its second input to the multiplexer input 105. The second switch 90 connects the terminal 65 to the second input of the third switch 95. With these connections, an external test signal can be injected into the system, and sampled at the output of amplifier 35 when the multiplexer 60 connects multiplexer input 105 to output 110. After completing testing of the external signal, processing returns to the normal operational mode processing step 125.

While the present invention has been described with respect to specific embodiments, these embodiments are not intended to limit the present invention, which is instead, defined by the following claims.

| IDENTIFICATION OF REFERENCE NUMERALS USED IN THE DRAWINGS | | |
|---|---|---|
| LEGEND | REF. NO. | FIGURE |
| RTD | 10 | 2 |
| RTD | 10 | 3 |
| REF HIGH | 25 | 1 |
| REF HIGH | 25 | 2 |
| REF HIGH | 25 | 3 |
| REF LOW | 30 | 1 |
| REF LOW | 30 | 2 |
| REF LOW | 30 | 3 |
| CMOS MUX | 60 | 2 |
| MUX | 60 | 3 |
| MAN TEST JUMPER | 70 | 2 |
| MAN TEST JUMPER | 70 | 2 |
| PREC. RES. | 80 | 3 |
| CONTROLLER | 85 | 3 |
| PREC. RES. | 120 | 3 |
| NORMAL OPERATION MODE | 125 | 4 |
| TIME TO TEST | 130 | 4 |
| AUCTIONEERING TEST MODE | 135 | 4 |
| AUTOMATIC EXITATION CURRENT MEASUREMENT MODE | 140 | 4 |
| TEST INJECTION MODE (PRIOR ART FIGS. 2/2A) | 145 | 4 |

## Claims

1. An automatic testing system for on-line testing of a transducer (10) excitation source, for providing signals (110) to an amplifier at predetermined times, said system comprising:
an excitation source (15);
an electrical element (80); characterized by:
connection means (95), having an output, for selectively connecting said output to one of the transducer (10) and said electrical element (80), and for selectively connecting said excitation source (15) to one of said electrical element and the transducer, in accordance with at least one control signal; and
control means for providing said at least one control signal to connect said excitation source (15) to said electrical element (80) during one of the predetermined times and to the transducer during another one of the predetermined times.

2. An automatic transducer excitation source testing system according to claim 1, wherein said connection means comprises:
a first switch (115) having an input operatively connected to said excitation source, a first output operatively connected to said electrical element and a second output connectable to the transducer;
a second switch (75) having an input operatively connected to said electrical element and an output; and
a third switch (95) having a first input connectable to the transducer, a second input operatively connected to said output of said second switch and an output.

3. An automatic transducer excitation source testing system according to claim 2, wherein said connection means comprises:

multiplexer means (60) for selectively connecting said output of said third switch to the amplifier during at least said one of the predetermined times.

4. An automatic transducer excitation source testing system according to claim 3, further comprising: additional electrical elements, and wherein said multiplexer means includes:

means for selectively connecting respective ones of said additional electrical elements to the amplifier during at least a further one of the predetermined times.

5. An automatic transducer excitation source testing system according to claim 3, further comprising: an additional excitation source;

an additional electrical element, and wherein said connection means further comprises:

a fourth switch having an input operatively connected to said additional excitation source, a first output operatively connected said additional electrical element and a second output connectable to the transducer.

6. An automatic transducer excitation source testing system according to claim 5, wherein each of said excitation source and said additional excitation source have a functioning and malfunctioning state, and said system further comprises:

source coupling means connectable to the transducer, for coupling one of said excitation source and said additional excitation source to the transducer in accordance with the state of said excitation source and said additional excitation source.

7. An automatic transducer excitation source testing system according to claim 6, wherein said source coupling means comprises a pair of diodes respectively connected to the second outputs of said first and fourth switches.

6

FIG.1

FIG.2

EP 0 387 031 A2

FIG.3

125 — NORMAL OPERATION MODE

130 — TIME TO TEST — N

Y

135 — AUCTIONEERING TEST MODE

140 — AUTOMATIC EXITATION CURRENT MEASUREMENT MODE

145 — TEST INJECTION MODE (PRIOR ART FIGS. 2/2A)

FIG. 4